(19) Europäisches Patentamt / European Patent Office / Office européen des brevets

(11) **EP 3 012 667 A1**

(12) **DEMANDE DE BREVET EUROPEEN**

(43) Date de publication:
**27.04.2016 Bulletin 2016/17**

(51) Int Cl.:
**G01S 19/41** *(2010.01)* **G01S 19/20** *(2010.01)*
**G01S 19/21** *(2010.01)*

(21) Numéro de dépôt: **15190819.1**

(22) Date de dépôt: **21.10.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **21.10.2014 FR 1402362**

(71) Demandeur: **THALES**
**92400 Courbevoie (FR)**

(72) Inventeurs:
• **CORAZZA, Stéphane**
**26000 VALENCE (FR)**

• **ROLLET, Stéphane**
**26000 VALENCE (FR)**
• **PAPIN, Laurent**
**26000 VALENCE (FR)**
• **GUILLOTON, Audrey**
**26000 VALENCE (FR)**
• **MONTAGNE, Bruno**
**26000 VALENCE (FR)**

(74) Mandataire: **Blot, Philippe Robert Emile**
**Cabinet Lavoix**
**2, place d'Estienne d'Orves**
**75441 Paris Cedex 09 (FR)**

(54) **DÉTECTION DE PERTURBATION D'UN MESSAGE DE CORRECTION DIFFÉRENTIELLE DE MESURE DE POSITIONNEMENT D'UN DISPOSITIF DE GÉOLOCALISATION PAR SATELLITE**

(57) L'invention concerne un procédé et un dispositif de détection de perturbation d'un message de correction de mesure de positionnement d'un dispositif de géolocalisation par satellite, apte à recevoir un signal radioélectrique composite comportant une pluralité de signaux émis chacun par un satellite en vue du dispositif de géolocalisation, et un message (MC) de correction différentielle de mesure de positionnement émis par un système d'augmentation de précision de géolocalisation par satellite. Le dispositif (20) de l'invention comporte des modules de calcul (32), pour chacun des satellites en vue, d'au moins une métrique de cohérence de correction différentielle dépendant d'une correction différentielle de mesure de positionnement ($C_{AS}$) extraite du message (MC) de correction différentielle reçu. Le dispositif (20) comporte également un module de détection (34) de perturbation du message de correction, lorsque le nombre de satellites pour lesquels la métrique de cohérence de correction différentielle est supérieure à un seuil prédéterminé dépasse un nombre de satellites prédéterminé ($N_0$), strictement supérieur à un.

FIG.2

EP 3 012 667 A1

**Description**

La présente invention concerne un procédé et un dispositif de détection de perturbation d'un message de correction différentielle de mesure de positionnement d'un dispositif de géolocalisation par satellite.

L'invention se situe dans le domaine de la sécurisation de la géolocalisation par satellite, dans le contexte d'éventuelles perturbations intentionnelles visant à leurrer un dispositif de géolocalisation.

Elle trouve de nombreuses applications, par exemple dans l'aéronautique, le transport maritime, le guidage autoroutier, le guidage d'engins et de robots.

La géolocalisation par satellite est largement utilisée de nos jours pour un positionnement précis ou pour des engins mobiles, munis de dispositifs de géolocalisation.

Grâce aux systèmes GNSS (« Global Navigation Satellite System »), un dispositif de géolocalisation, comportant un récepteur de signaux émis par satellite approprié, est apte à recevoir des messages de navigation comportant des signaux radioélectriques émis par une pluralité de satellites et à fournir, après calcul, des informations de positionnement du porteur du dispositif de géolocalisation dans un repère géographique.

Chaque dispositif de géolocalisation capte des informations transmises dans des signaux radioélectriques émis par différents satellites, et calcule, pour chaque satellite en vue, à partir de ces informations reçues, une mesure de positionnement, qui est une estimation de la distance entre le dispositif de géolocalisation lui-même et le satellite en vue, également appelée pseudo-distance. La pseudo-distance est différente de la distance effective entre le satellite considéré et le dispositif de géolocalisation à cause des erreurs éventuelles dans les informations reçues, dues par exemple aux conditions atmosphériques dans la troposphère, et de l'erreur sur l'horloge interne du dispositif de géolocalisation. Il est possible de calculer une correction d'erreurs de mesures de positionnement à partir des informations transmises par une pluralité de satellites distincts.

Le système GPS (« Global Positioning System ») est un système de géolocalisation par satellite largement utilisé.

Il existe des systèmes d'augmentation de précision de géolocalisation par satellite connus.

Par exemple, le système d'augmentation spatiale utilisant des satellites géostationnaires, appelé SBAS (pour « satellite-based augmentation system »), utilise des satellites géostationnaires qui écoutent la constellation des satellites de positionnement d'un système GNSS, tel le système GPS, et est apte à envoyer à un dispositif de géolocalisation récepteur des messages de correction comprenant des informations de correction de mesure de positionnement et d'intégrité relatives à chacun des satellites de positionnement.

Le système SBAS tient compte d'erreurs provenant de sources distinctes : erreur ionosphérique, erreur troposphérique. Il inclut des corrections d'orbite des satellites GNSS, et des corrections spécifiques. Le système SBAS fournit également des informations d'intégrité, destinées à quantifier la confiance associée aux informations de correction transmises.

Le standard technique RTCA DO-229D "Minimum Operational Performance Standards for Global Positioning System/Wide Area Augmentation System Airborne Equipment" définit le système d'augmentation spatiale SBAS par rapport au système GPS.

Un système d'augmentation de la précision de positionnement alternatif est le système GBAS (« ground-based augmentation system »), qui utilise des segments de référence positionnés au sol, ces segments de référence comportant des récepteurs GNSS aptes à recevoir des informations des satellites de positionnement et à calculer leur position à partir des informations reçues. La position précise des segments de référence étant connue, il est possible de calculer des corrections de mesures de positionnement. Le système GBAS fournit également des informations d'intégrité, de manière analogue au système SBAS.

Il existe des systèmes de vérification de sécurité et d'intégrité de géolocalisation, visant à détecter la présence de signaux de perturbation ajoutés, appelés également signaux de leurrage, similaires aux signaux radiofréquence émis par les satellites mais portant des informations erronées visant à induire un calcul d'information de positionnement erroné.

Cependant, il est également nécessaire d'envisager la possibilité de perturbation intentionnelle des messages de correction différentielle de mesure de positionnement utilisés par les récepteurs SBAS ou GBAS, visant à faire calculer une position erronée au dispositif de géolocalisation comportant le récepteur.

L'invention vise à détecter d'éventuelles perturbations des messages de correction différentielle de mesure de positionnement émis par des systèmes d'augmentation de précision de géolocalisation par satellite.

A cet effet, l'invention propose un procédé de détection de perturbation d'un message de correction de mesure de positionnement d'un dispositif de géolocalisation par satellite, apte à recevoir un signal radioélectrique composite comportant une pluralité de signaux émis chacun par un satellite en vue du dispositif de géolocalisation, et un message de correction différentielle de mesure de positionnement émis par un système d'augmentation de précision de géolocalisation par satellite.

Le procédé comporte les étapes suivantes:

- calcul, pour chacun des satellites en vue, d'au moins une métrique de cohérence de correction différentielle dépendant d'une correction différentielle de mesure de positionnement extraite du message de correction différentielle reçu,
- détection de perturbation du message de correction lorsque le nombre de satellites pour lesquels la métrique de cohérence de correction différentielle est supérieure à un seuil prédéterminé dépasse un nombre de satellites prédéterminé, strictement supérieur à un.

Avantageusement, l'invention permet de détecter la présence de perturbation d'un message de correction différentielle de mesure de positionnement, et donc d'alerter l'utilisateur d'une présence éventuelle de leurrage et par conséquent d'améliorer la sécurité de géolocalisation.

Le procédé de détection de perturbation d'un message de correction différentielle de mesure de positionnement selon l'invention peut également présenter une ou plusieurs des caractéristiques ci-dessous, prises dans toutes les combinaisons techniquement acceptables.

En cas de détection de perturbation, une alarme est levée.

Le nombre de satellites prédéterminé est supérieur ou égal à trois.

Deux métriques de cohérence de correction différentielle sont calculées.

L'étape de calcul comporte les sous-étapes suivantes :

- calcul, à partir du signal radioélectrique composite reçu, d'une première différence entre une distance mesurée et une distance estimée entre le dispositif de géolocalisation et le satellite en vue,
- calcul, en utilisant ledit message de correction différentielle de mesure de positionnement reçu, d'une deuxième différence entre une distance mesurée et une distance estimée entre le dispositif de géolocalisation et le satellite en vue,
- calcul de la valeur absolue de l'écart entre les dites première différence et deuxième différence.

La première différence entre une distance mesurée et une distance estimée dépend d'un premier terme de correction obtenu à partir du signal composite reçu, et la deuxième différence entre une distance mesurée et une distance estimée dépend d'un deuxième terme de correction obtenu à partir du message de correction différentielle reçu.

La valeur absolue de l'écart entre la première différence et la deuxième différence est comparée à un seuil dépendant dudit satellite en vue, fonction du premier terme de correction applicable audit satellite en vue.

L'étape de calcul comporte en outre le calcul d'une métrique de cohérence de correction différentielle égale, pour chaque satellite en vue, à la valeur absolue de la correction différentielle de mesure de positionnement extraite du message de correction différentielle reçu.

Le système d'augmentation de précision de géolocalisation par satellite est un système SBAS.

Selon un deuxième aspect, l'invention concerne un dispositif de détection de perturbation d'un message de correction de mesure de positionnement d'un dispositif de géolocalisation par satellite, apte à recevoir un signal radioélectrique composite comportant une pluralité de signaux émis chacun par un satellite en vue du dispositif de géolocalisation, et un message de correction différentielle de mesure de positionnement émis par un système d'augmentation de précision de géolocalisation par satellite.

Le dispositif comporte des modules de:

- calcul, pour chacun des satellites en vue, d'au moins une métrique de cohérence de correction différentielle dépendant d'une correction différentielle de mesure de positionnement extraite du message de correction différentielle reçu,
- détection de perturbation du message de correction lorsque le nombre de satellites pour lesquels la métrique de cohérence de correction différentielle est supérieure à un seuil prédéterminé dépasse un nombre de satellites prédéterminé, strictement supérieur à un.

Les avantages du dispositif revendiqué sont analogues à ceux du procédé de détection de perturbation brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

- la figure 1 est une illustration schématique d'un système de géolocalisation ;
- la figure 2 illustre schématiquement les modules fonctionnels d'un dispositif de géolocalisation adapté à mettre en oeuvre l'invention ;
- la figure 3 est un synoptique des principales étapes d'un procédé de détection de perturbation du message de correction différentielle selon un premier mode réalisation de l'invention ;
- la figure 4 illustre un mode de réalisation de calcul d'une métrique de cohérence de correction différentielle ;
- la figure 5 est un synoptique des principales étapes d'un procédé de détection de perturbation du message de correction différentielle selon un autre mode de réalisation de l'invention.

L'invention sera décrite ci-après dans le cas de l'utilisation du système de géolocalisation GPS.

Cependant, l'invention ne se limite pas à ce cas de figure, et s'applique de manière plus générale pour tout autre système de géolocalisation GNSS.

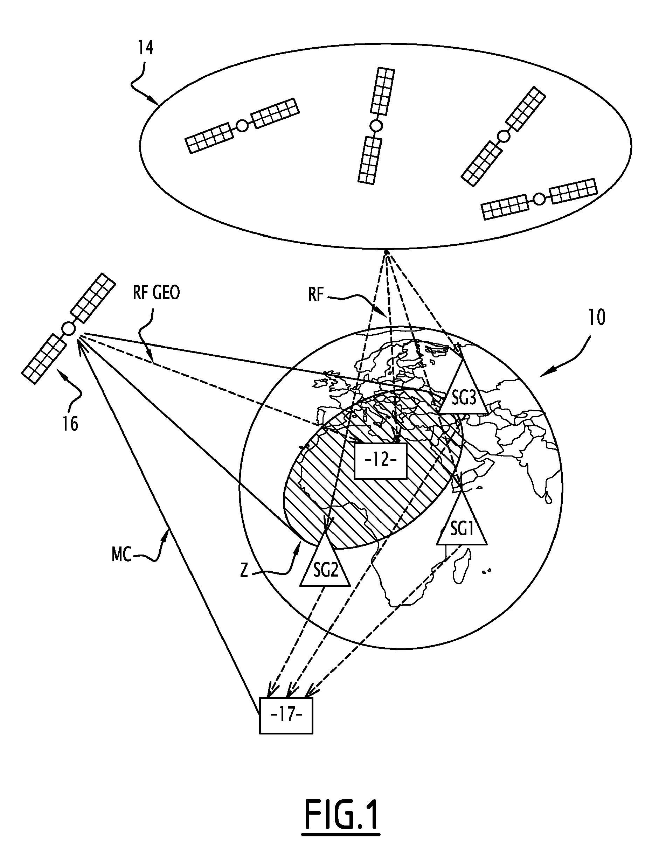

La figure 1 illustre un système de géolocalisation par satellite 10, comportant un dispositif de géolocalisation récepteur 12, qui est un dispositif de géolocalisation utilisateur, positionné à bord d'une plateforme en mouvement, par exemple d'un aéronef (non représenté).

Le dispositif de géolocalisation 12 est apte à recevoir des signaux de type GPS d'une constellation de satellites 14, comportant une pluralité de satellites dont au moins quatre sont en vue du dispositif de géolocalisation 12.

Les signaux radiofréquence émis par les satellites en vue du dispositif de géolocalisation 12 sont reçus au niveau d'une antenne réceptrice de ce dispositif de géolocalisation 12, sous la forme d'un message de navigation comportant un signal radioélectrique composite RF.

Le dispositif de géolocalisation 12 est apte à séparer les signaux reçus par canal satellite d'indice i (correspondant au satellite Si) et à calculer une pseudo-distance et une distance estimée pour chacun des canaux satellite traités. La géolocalisation est effectuée par triangulation sur la base des informations reçues.

Le système de géolocalisation 10 comporte également un satellite géostationnaire 16, qui a une zone de couverture Z associée. Le dispositif de géolocalisation 12 est apte à recevoir les signaux RF GEO et à en extraire les messages MC de correction différentielle, comportant des informations d'intégrité et des corrections différentielles de mesure de positionnement vis-à-vis de chacun des satellites de la constellation 14.

Des stations SG1, SG2, SG3 reçoivent les signaux radiofréquence émis par les satellites GPS au niveau d'une antenne. Les stations sont aptes à séparer les signaux reçus par canal satellite d'indice i (correspondant au satellite Si) et à calculer une pseudo-distance. Ces pseudo-distances sont transmises à un organe de calcul 17 qui élabore les messages de correction MC. Ceux-ci sont chargés sur les satellites géostationnaires 16 pour être réémis au travers de sa liaison descendante RF GEO.

Par hypothèse, les signaux radioélectriques RF reçus de la constellation GNSS 14 sont des signaux licites, des erreurs de calcul de positionnement pouvant intervenir à cause des conditions atmosphériques, et des éventuelles dérives d'horloge entre l'horloge du dispositif de géolocalisation et les horloges des satellites de la constellation 14.

Les messages de correction différentielle transmis par le système d'augmentation de précision de géolocalisation par satellite peuvent être perturbés et induire un calcul de géolocalisation erroné. Il s'agit dans ce cas d'une attaque de leurrage au niveau de la correction différentielle de mesure de positionnement.

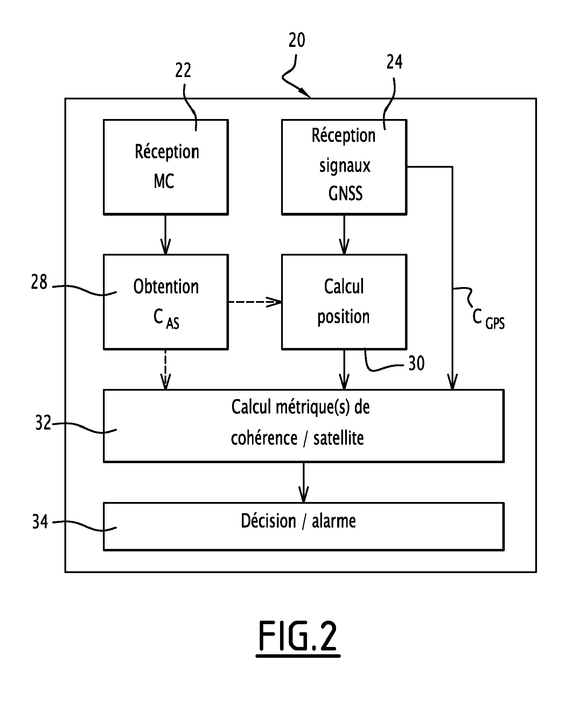

La figure 2 illustre schématiquement un dispositif de géolocalisation 20 apte à détecter une perturbation du message de correction différentielle de mesure de positionnement.

Le dispositif 20 comporte un module 22 de réception de messages de correction MC différentielle selon un système d'augmentation de la précision de positionnement.

Dans un mode de réalisation, il s'agit de messages de correction différentielle SBAS.

En alternative, un système d'augmentation de la précision GBAS est utilisé, et les messages de correction différentielle sont des messages GBAS.

Le dispositif 20 comporte également un module 24 de réception de signaux radiofréquence en provenance de la constellation de satellites GNSS, par exemple des signaux GPS. Le module de réception 24 élabore les mesures de positionnement et les corrections GPS : $C_{GPS}$.

Le module 28 permet d'obtenir, pour chaque satellite Si en vue, une correction $C_{AS,i}$ de position à partir du message MC de correction différentielle reçu.

Un module de calcul de géolocalisation 30 permet de calculer une position estimée du dispositif 20, en fonction des mesures de positionnement reçues, de la correction de géolocalisation GPS et/ou de la correction de position $C_{AS,i}$ obtenue à partir des messages MC de correction différentielle.

Le dispositif de géolocalisation 20 comporte en outre un module 32 de calcul d'au moins une métrique de cohérence de correction différentielle pour chaque satellite Si en vue, et un module 34 de décision et de levée d'alarme.

Les modules 32, 34 sont mis en oeuvre par un dispositif de calcul comportant au moins un processeur et une mémoire.

Par exemple, le dispositif de calcul est un ordinateur.

En variante, le dispositif de calcul est mis en oeuvre par un circuit intégré de type FPGA ou par un circuit intégré dédié de type ASIC.

Le module 34 utilise la ou les métriques de cohérence de correction différentielle calculées et détecte une éventuelle perturbation des messages de correction différentielle reçus.

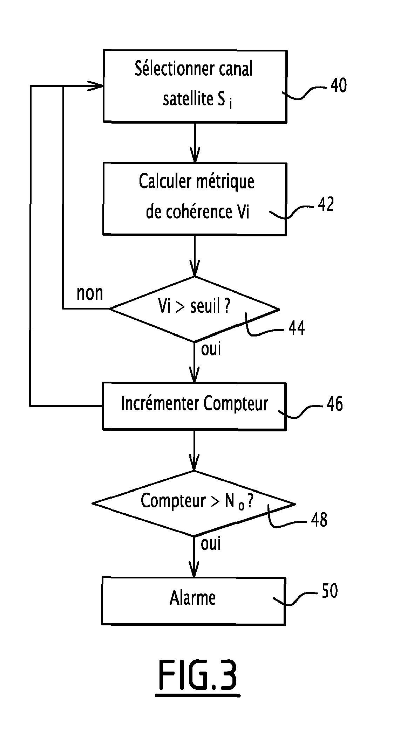

La figure 3 illustre les principales étapes d'un procédé de détection de perturbation d'un message de correction différentielle de mesure de positionnement selon un mode de réalisation de l'invention.

Le procédé est mis en oeuvre périodiquement, à des instants temporels donnés, par exemple toutes les secondes.

Lors d'une première étape 40, un canal satellite Si correspondant à un satellite en vue du dispositif de géolocalisation est considéré.

Ensuite, au moins une métrique de cohérence de correction différentielle Vi, appelée ci-après simplement métrique de cohérence, est calculée lors de l'étape de calcul 42, prenant en compte la correction de position $C_{AS,i}$ obtenue à partir du message de correction reçu.

Comme expliqué ci-après, deux telles métriques de cohérence sont proposées.

La métrique de cohérence Vi calculée pour le satellite Si est comparée à un seuil prédéterminé lors d'une étape de comparaison 44.

Lorsque Vi est supérieure au seuil, une variable Compteur, initialisée à 0, est incrémentée lors de l'étape 46.

L'étape 44 est suivie de l'étape 40 préalablement décrite, afin de traiter tous les satellites en vue du dispositif de géolocalisation.

Après le traitement de tous les satellites en vue du dispositif de géolocalisation, la valeur finale de la variable Compteur est comparée à un nombre de canaux satellites prédéterminé $N_0$.

De préférence, $N_0$ est supérieur ou égal à trois, afin de minimiser la probabilité de fausse alarme.

Si la variable Compteur dépasse le nombre prédétermine $N_0$, une alarme est levée lors de l'étape 50.

Le procédé tel que décrit ci-dessus est ensuite répété pour un nouveau message de correction différentielle de mesure de positionnement, après remise à 0 de la variable Compteur.

Selon un premier mode de réalisation, une première métrique de cohérence fonction de la correction différentielle calculée à l'étape de calcul 42 est la valeur absolue de la correction de position $C_{AS,i}$ :

$$V_{1,i} = \left| C_{AS,i} \right|$$

Les valeurs $V_{1,i}$ calculées sont comparées à un premier seuil $Th_1$.

De préférence, un seuil $Th_1$ compris entre 60m et 150m est utilisé, correspondant dans le domaine de l'avionique civile à des tolérances d'erreur compatibles des opérations aériennes « En Route ». D'autres seuils peuvent être réglés en fonction de l'application visée.

Selon un deuxième mode de réalisation, une deuxième métrique de cohérence fonction de la correction de position différentielle est calculée en fonction des différences entre distances mesurées et estimées entre chaque satellite Si et le dispositif de géolocalisation.

En effet, pour le calcul de sa position de géolocalisation, le dispositif de géolocalisation résout une équation matricielle permettant de calculer une solution de navigation :

$$A \cdot \delta X = \delta B \qquad (EQ1)$$

où X est le positionnement spatio-temporel du dispositif de géolocalisation. X comprend les trois composantes x, y et z de positionnement spatial dans un référentiel ECEF, ainsi qu'une composante temporelle $b_u$ reliant le temps GPS et le temps local du dispositif de géolocalisation.

$\delta X$ est l'inconnue de (EQ1) et contient les écarts par rapport aux composantes de X préalablement calculées,

A est une matrice comprenant autant de lignes que de satellites en vue du dispositif de géolocalisation, soit I lignes, et quatre colonnes, et comprenant pour chaque colonne J les dérivées partielles des fonctions $f_i(X)$ par rapport à la $J^{ième}$ composante parmi les quatre composantes de $X$.

Etant donné la position $(X_l, Y_l, Z_l)$ du $l^{ième}$ satellite, l'expression de la fonction $f_l(X)$ s'écrit :

$$f_l(X) = \sqrt{(x - X_l)^2 + (y - Y_l)^2 + (z - Z_l)^2} + b_u \qquad (EQ2)$$

Le module 24 du dispositif 20 permet d'obtenir le triplet $(X_l, Y_l, Z_l)$.

Le terme $\delta B$ comprend, pour chaque satellite Si, la différence entre la distance entre le dispositif de géolocalisation et le satellite Si mesurée et la distance entre le dispositif de géolocalisation et le satellite Si estimée.

$$\delta B = R - \rho + c \qquad (EQ3)$$

Où $R$ est la distance estimée précédemment, $\rho$ est la mesure de positionnement, autrement appelée pseudo-distance, et $c$ est un terme de correction différentielle apportée par un message de navigation ou de correction différentielle de mesure de positionnement.

Les termes de correction c proviennent soit de modèles GPS ($C_{GPS}$) transmis par des satellites de la constellation, donc des messages de navigation, soit de modèles d'augmentation de précision ($C_{AS}$), provenant de satellites géostationnaires dans le cas des systèmes d'augmentation de précision SBAS ou de segments de référence au sol dans le cas des systèmes d'augmentation de précision GBAS.

La deuxième métrique de cohérence est calculée, pour chaque satellite en vue Si, par la formule :

$$V_{2,i} = \left| \delta B_{AS} - \delta B_{GPS} \right| \qquad (EQ4)$$

Où $\delta B_{AS}$ est calculé en prenant en compte uniquement le terme de correction $C_{AS}$ provenant des modèles d'augmentation de précision, et $\delta B_{GPS}$ est calculé en prenant en compte uniquement le terme de correction $C_{GPS}$ transmis par chacun des satellites Si de la constellation :

$$\delta B_{AS} = R - \rho + C_{AS} \qquad (EQ5)$$

$$\delta B_{GPS} = R - \rho + C_{GPS} \qquad (EQ6)$$

Lorsque le système d'augmentation de précision SBAS est utilisé, le terme $C_{AS}$ tient compte du modèle d'erreur troposphérique standard, de la correction d'orbite GPS, de la correction ionosphérique SBAS, des corrections rapides et des corrections lentes SBAS.

Dans le cas d'une perturbation intentionnelle du message de correction différentielle de mesure, le terme $\delta B_{AS}$ peut également comprendre une erreur $Err_{AS}$, destinée à induire un calcul de positionnement de géolocalisation erroné :

$$\delta B_{AS} = R - \rho + C_{AS} = R - \rho + C''_{AS} + Err_{AS} \qquad (EQ7)$$

Où $C'_{AS}$ est le terme de correction réel et $Err_{AS}$ l'erreur intentionnelle.

Le terme $C_{GPS}$ tient compte du modèle d'erreur troposphérique standard, de la correction d'orbite GPS, de la correction ionosphérique SBAS.

Ainsi, la deuxième métrique de cohérence s'écrit également :

$$V_{2,i} = \left| C'_{AS} + Err_{AS} - C_{GPS} \right| \qquad (EQ8)$$

Les valeurs $V_{2,i}$ calculées sont comparées à un deuxième seuil $Th_2$, qui prend en compte la précision attendue des modèles GPS et des modèles SBAS. $Th_2$ peut être préalablement mémorisé.

De préférence, le deuxième seuil $Th_2$ est compris dans la plage [60m...150m] selon l'exemple précédent. Alternativement, le seuil $Th_2$ peut être indexé selon $|C_{GPS}|$ applicable au $i^{ème}$ satellite Si, comme dans la table ci-dessous.

| $|C_{GPS,i}|$ | $V_{2,i}$ |
|---|---|
| Indisponible | indisponible |
| < 10m | 60 m |
| >= 10 m | 150 m |

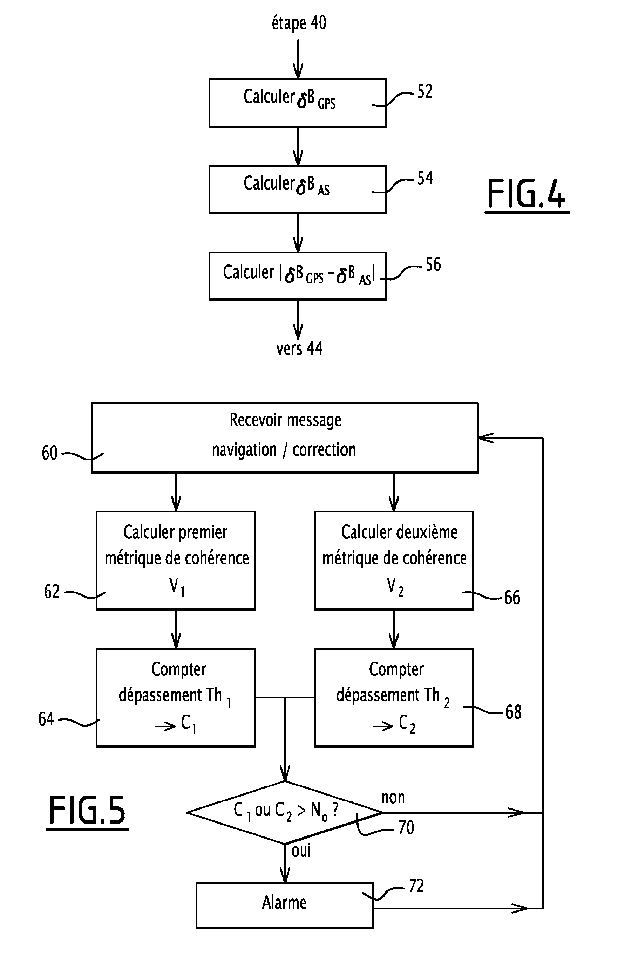

Dans ce deuxième mode de réalisation, l'étape de calcul d'une métrique de cohérence 42 comprend les sous-étapes illustrées à la figure 4, pour le calcul de la deuxième métrique de cohérence.

Lors d'une première étape de calcul 52, $\delta B_{GPS}$ est calculé pour le satellite Si courant.

Ensuite, lors d'une deuxième étape de calcul 54, $\delta B_{AS}$ est calculé pour le satellite Si courant.

Enfin, lors d'une troisième étape de calcul 56, la valeur absolue de l'écart $|\delta B_{AS} - \delta B_{GPS}|$ est calculée.

Il est à noter qu'en alternative, les étapes 52, 54 sont effectuées avant l'étape 40 de sélection d'un canal satellite Si, pour l'ensemble des satellites en vue.

Selon un troisième mode de réalisation, les deux métriques de cohérence sont surveillées, et une alarme est levée si le compteur de dépassement de seuil est supérieur à un nombre de canaux satellites prédéterminé pour l'une ou l'autre des deux métriques.

Ce mode de réalisation est illustré en référence à la figure 5.

Les messages respectifs de navigation et de correction différentielle de mesure de positionnement sont reçus lors de l'étape de réception 60, pour un instant de positionnement courant.

Il est à noter que les messages de correction différentielle de mesure de positionnement peuvent être reçus légèrement après les messages de navigation, le décalage temporel n'excédant pas 6 secondes.

Ensuite, la première métrique de cohérence est calculée, pour chaque satellite en vue, lors de l'étape 62, selon le procédé décrit précédemment, et le compteur C1 comptabilisant le nombre de satellites pour lesquels la valeur de la première métrique de cohérence dépasse le seuil Th1 est mis à jour (étape 64).

Successivement ou sensiblement en parallèle, la deuxième métrique de cohérence est calculée, pour chaque satellite en vue, lors de l'étape 66, selon le procédé décrit précédemment, et le compteur C2 comptabilisant le nombre de satellites pour lesquels la valeur de la deuxième métrique de cohérence dépasse le seuil Th2 est mis à jour (étape 68).

Ensuite, ces deux compteurs C1, C2 sont comparés à un nombre de canaux satellites prédéterminé $N_0$ lors d'une étape de comparaison 70.

Si l'un ou l'autre de ces compteurs dépasse le nombre prédéterminé $N_0$, une alarme est levée à l'étape 72.

L'étape de comparaison 70, en cas de comparaison négative, et l'étape 72 sont suivies de l'étape de réception 60 précédemment décrite.

Avantageusement, la comparaison des dépassements de seuil pour plusieurs canaux satellites ($N_0$) permet d'éviter une fausse alarme.

Le test cumulatif de deux métriques de cohérence permet d'améliorer la détection d'un probable leurrage introduit dans le message de correction différentielle de mesure de positionnement.

**Revendications**

1. Procédé de détection de perturbation d'un message de correction de mesure de positionnement d'un dispositif de géolocalisation par satellite, apte à recevoir un signal radioélectrique composite comportant une pluralité de signaux émis chacun par un satellite en vue du dispositif de géolocalisation, et un message de correction différentielle de mesure de positionnement émis par un système d'augmentation de précision de géolocalisation par satellite, **caractérisé en ce qu'**il comporte les étapes suivantes:

   - calcul (42, 62, 66), pour chacun des satellites en vue, d'au moins une métrique de cohérence de correction différentielle dépendant d'une correction différentielle de mesure de positionnement extraite du message de correction différentielle reçu,
   - détection (48, 70) de perturbation du message de correction lorsque le nombre de satellites pour lesquels la métrique de cohérence de correction différentielle est supérieure à un seuil prédéterminé dépasse un nombre de satellites prédéterminé ($N_0$), strictement supérieur à un.

2. Procédé de détection de perturbation selon la revendication 1, **caractérisé en ce qu'**en cas de détection de perturbation, une alarme est levée (50, 72).

3. Procédé de détection de perturbation selon l'une des revendications 1 ou 2, **caractérisé en ce que** ledit nombre de satellites prédéterminé ($N_0$) est supérieur ou égal à trois.

4. Procédé de détection de perturbation selon l'une quelconque des revendications 1 à 3, **caractérisé en ce que** deux métriques de cohérence de correction différentielle sont calculées.

5. Procédé de détection de perturbation selon l'une quelconque des revendications précédentes, **caractérisé en ce que** l'étape de calcul (42, 66) comporte les sous-étapes suivantes :

   - calcul (52), à partir du signal radioélectrique composite reçu, d'une première différence entre une distance mesurée et une distance estimée entre le dispositif de géolocalisation et le satellite en vue,

- calcul (54), en utilisant ledit message de correction différentielle de mesure de positionnement reçu, d'une deuxième différence entre une distance mesurée et une distance estimée entre le dispositif de géolocalisation et le satellite en vue,

- calcul (56) de la valeur absolue de l'écart entre les dites première différence et deuxième différence.

6. Procédé de détection de perturbation selon la revendication 5, **caractérisé en ce que** la première différence entre une distance mesurée et une distance estimée dépend d'un premier terme de correction ($C_{GPS}$) obtenu à partir du signal composite reçu, et **en ce que** la deuxième différence entre une distance mesurée et une distance estimée dépend d'un deuxième terme de correction ($C_{AS}$) obtenu à partir du message de correction différentielle reçu.

7. Procédé de détection de perturbation selon l'une des revendications 5 ou 6, **caractérisé en ce que** la valeur absolue de l'écart entre la première différence et la deuxième différence est comparée à un seuil (Th2) dépendant dudit satellite en vue, fonction du premier terme de correction ($C_{GPS}$) applicable audit satellite en vue.

8. Procédé de détection de perturbation selon l'une quelconque des revendications précédentes, **caractérisé en ce que** l'étape de calcul (40, 62) comporte en outre le calcul d'une métrique de cohérence de correction différentielle égale, pour chaque satellite en vue, à la valeur absolue de la correction différentielle de mesure de positionnement extraite du message de correction différentielle reçu.

9. Procédé de détection de perturbation selon l'une quelconque des revendications précédentes, **caractérisé en ce que** le système d'augmentation de précision de géolocalisation par satellite est un système SBAS.

10. Dispositif de détection de perturbation d'un message de correction de mesure de positionnement d'un dispositif de géolocalisation par satellite, apte à recevoir un signal radioélectrique composite comportant une pluralité de signaux émis chacun par un satellite en vue du dispositif de géolocalisation, et un message (MC) de correction différentielle de mesure de positionnement émis par un système d'augmentation de précision de géolocalisation par satellite, **caractérisé en ce qu'**il comporte des modules de:

- calcul (32), pour chacun des satellites en vue, d'au moins une métrique de cohérence de correction différentielle dépendant d'une correction différentielle de mesure de positionnement ($C_{AS}$) extraite du message (MC) de correction différentielle reçu,

- détection (34) de perturbation du message de correction lorsque le nombre de satellites pour lesquels la métrique de cohérence de correction différentielle est supérieure à un seuil prédéterminé dépasse un nombre de satellites prédéterminé ($N_0$), strictement supérieur à un.

## FIG.1

## FIG.2

```
            ┌─────────────────────┐
            │  Sélectionner canal │
      ┌────→│   satellite S_i     │──── 40
      │     └─────────────────────┘
      │                │
      │                ▼
      │     ┌─────────────────────┐
      │     │  Calculer métrique  │
      │     │  de cohérence Vi    │──── 42
      │     └─────────────────────┘
      │                │
      │                ▼
  non │            ◇─────────◇
      └───────────  Vi > seuil ?  ── 44
                    ◇─────────◇
                        │ oui
                        ▼
      ┌─────────────────────┐
      │ Incrémenter Compteur│──── 46
      └─────────────────────┘
                │
                ▼
            ◇─────────◇
          Compteur > N_o ? ── 48
            ◇─────────◇
                │ oui
                ▼
      ┌─────────────────────┐
      │       Alarme        │──── 50
      └─────────────────────┘
```

$$\underline{\text{FIG.3}}$$

étape 40

$\downarrow$

Calculer $\delta^B{}_{GPS}$ —— 52

$\downarrow$

Calculer $\delta^B{}_{AS}$ —— 54

$\downarrow$

Calculer $|\delta^B{}_{GPS} - \delta^B{}_{AS}|$ —— 56

$\downarrow$

vers 44

## FIG.4

60 —— Recevoir message
navigation / correction

62 —— Calculer premier
métrique de cohérence
$V_1$

Calculer deuxième
métrique de cohérence
$V_2$ —— 66

64 —— Compter
dépassement $Th_1$
$\rightarrow C_1$

Compter
dépassement $Th_2$
$\rightarrow C_2$ —— 68

## FIG.5

$C_1$ ou $C_2 > N_0$ ? —— 70

non

oui

Alarme —— 72

Europäisches
Patentamt

European
Patent Office

Office européen
des brevets

**RAPPORT DE RECHERCHE EUROPEENNE**

Numéro de la demande

EP 15 19 0819

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 8 742 984 B2 (TRAUTENBERG HANS L [DE]) 3 juin 2014 (2014-06-03) * abrégé; revendication 1; figures 1a-1c * * colonne 6, ligne 6 - colonne 7, ligne 17 * ----- | 1-10 | INV. G01S19/41 G01S19/20 G01S19/21 |
| A | EP 2 146 217 A1 (HONEYWELL INT INC [US]) 20 janvier 2010 (2010-01-20) * abrégé; revendication 6; figure 1 * * alinéas [0008], [0010], [0012], [0013], [0015], [0022] - [0026] * ----- | 1-10 | |
| A | US 7 747 384 B1 (NADKARNI VIVEK BHALCHANDRA [US] ET AL) 29 juin 2010 (2010-06-29) * abrégé; revendication 1 * * colonne 10, ligne 62 - colonne 11, ligne 30 * * colonne 13, ligne 36 - colonne 13, ligne 65 * ----- | 1-10 | |
| A | US 2011/181465 A1 (LI RONGSHENG [US] ET AL) 28 juillet 2011 (2011-07-28) * abrégé; figures 2,4,7 * * alinéa [0056] * ----- | 1,10 | **DOMAINES TECHNIQUES RECHERCHES (IPC)** G01S |

Le présent rapport a été établi pour toutes les revendications

| Lieu de la recherche | Date d'achèvement de la recherche | Examinateur |
|---|---|---|
| Munich | 10 février 2016 | Mercier, Francois |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 19 0819

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2016

| Document brevet cité au rapport de recherche | Date de publication | Membre(s) de la famille de brevet(s) | Date de publication |
|---|---|---|---|
| US 8742984 B2 | 03-06-2014 | EP 2418515 A1<br>US 2012019411 A1 | 15-02-2012<br>26-01-2012 |
| EP 2146217 A1 | 20-01-2010 | AT 497181 T<br>EP 2146217 A1<br>JP 2010008418 A<br>US 2009322598 A1 | 15-02-2011<br>20-01-2010<br>14-01-2010<br>31-12-2009 |
| US 7747384 B1 | 29-06-2010 | AUCUN | |
| US 2011181465 A1 | 28-07-2011 | CN 102713672 A<br>EP 2529248 A1<br>JP 5813664 B2<br>JP 2013518249 A<br>US 2011181465 A1<br>WO 2011093964 A1 | 03-10-2012<br>05-12-2012<br>17-11-2015<br>20-05-2013<br>28-07-2011<br>04-08-2011 |

EPO FORM P0460

Pour tout renseignement concernant cette annexe : voir Journal Officiel de l'Office européen des brevets, No.12/82